# EUROPEAN PATENT APPLICATION

(11) **EP 2 230 485 A1**
(43) Date of publication of application: **22.09.2010**
(21) Application number: 09003868.8
(22) Date of filing: 18.03.2009
(51) Int. Cl.: G01D 4/00, H04B 3/54, G01R 22/06, H02J 13/00

(54) **An intelligent energy control system**

(71) Applicant: Zense Technologies ApS, 9400 Nørresundby (DK)
(72) Inventor: Alrø, Erik, 9380 Vestbjerg (DK)
(74) Representative: Sundien, Thomas

(57) **Abstract**

The present invention relates to an intelligent energy control system to be connected to power lines e.g. in a building, said system comprises a PC interface and power line interfaces adapted to be connected to said power lines and to transmit and receive information signals via said power lines,
- at least some of said power line interfaces are adapted to be used when connecting energy consumers to said power lines and comprise
○ means for measuring the amount of power consumed by said energy consumer and
○ means for transmitting the consumed amount of power to said PC interface as information signals via said power lines,

- said PC interface further being adapted to be connected to a data processing device, such as a PC, for processing said received data and comprises
○ means for receiving information signals with measured consumed amount of power from said power line interfaces via said power lines and
○ means for storing said received consumed amount of power for later processing.

The invention further relates to a power line interface and a PC interface to be used in an intelligent energy control system as described above.

Thereby it is possible to get a better control of the energy consumption consumed via the power lines in e.g. a house and this leads to energy saving in connection with electricity consumers.

## Description

### FIELD OF THE INVENTION

The present invention relates to an intelligent energy control system to be connected to power lines e.g. in a building. The invention further relates to a power line interface and a PC interface to be used in an intelligent energy control system.

### BACKGROUND OF THE INVENTION

With the existing electricity systems as of today a central monitoring of solely the total measurement of the energy consumption is achievable.

It is not possible to measure the exact amount of energy consumed at each single power outlet. This old-fashioned central monitoring of the energy consumption does not provide the owner with an insight concerning the amount of energy which is consumed at a particular outlet.

If the monitoring of all the energy consumed in each single power outlet was feasible, it would enable the owner to keep track of the energy consumption in each single outlet and this would give the owner an awareness of unnecessary energy consumption in the building.

However, there is one known way to monitor the energy consumed in separate electricity outlets. The attachment of an electricity meter on the outside of an existing power outlet can monitor the energy consumed in that particular outlet. This method has a limitation given that, in this way it is only the electricity consumed in that particular power outlet that is monitored, so an overall identification of energy used in each single outlet demands attachment of an electricity meter on the outside of every power outlet in the building. At the same time, an external electricity meter will take up room and it is not aesthetic in the regard of a design perspective. Furthermore, the measurement will only be in real-time, and not presented with historic data.

### OBJECT AND SUMMARY OF THE INVENTION

The object of the invention is to solve the above mentioned problems.

The present invention relates to an intelligent energy control system to be connected to power lines, e.g. in a building, said system comprises a PC interface and power line interfaces adapted to be connected to said power lines and to transmit and receive information signals via said power lines,
- at least some of said power line interfaces are adapted to be used when connecting energy consumers to said power lines and comprise:
   ○ means for measuring the amount of power consumed by said energy consumer and
   ○ means for transmitting the consumed amount of power to said PC interface as information signals via said power lines,
- said PC interface further being adapted to be connected to a data processing device, such as a PC, for processing said received data and comprises
   ○ means for receiving information signals with measured consumed amount of power from said power line interfaces via said power lines and
   ○ means for storing said received consumed amount of power for later processing.

The invention further relates to a power line interface and a PC interface to be used in an intelligent energy control system as described above.

Thereby it is possible to get a better control of the energy consumption consumed via the power lines in e.g. a building and this leads to energy saving in connection with electricity consumers.

### BRIEF DESCRIPTION OF THE DRAWINGS

In the following, preferred embodiments of the invention will be described referring to the figure, where
figure 1 illustrates an overview of the intelligent energy control system according to the present invention,
figure 2 illustrates the elements in a switch from an intelligent energy control system according to the present invention,
figure 3 illustrates the elements of an outlet from an intelligent energy control system according to the present invention,
figure 4 illustrates the elements of a switch with an outlet having an motion sensor from an intelligent energy control system according to the present invention,
figure 5 illustrates the elements of an outlet with or without a switch having a motion sensor from an intelligent energy control system according to the present invention,
figure 6 illustrates the elements of a PC interface from an intelligent energy control system according to the present invention.

### DESCRIPTION OF EMBODIMENTS

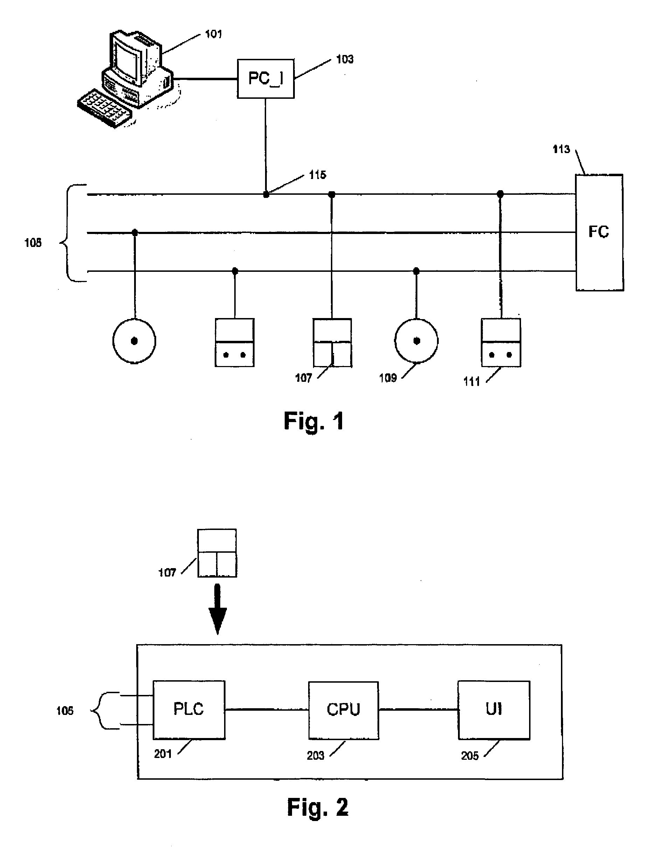

In figure 1 an overview of the intelligent energy control system according to the present invention is illustrated. The figure shows the intelligent energy control system implemented in connection with the main power lines 105 e.g. in a building. The electricity system comprises a communication kit comprising a PC interface (PC_I) 103, where one end of the PC interface can be connected to a PC 101 having usage specific software installed via e.g. a USB port and where the other end is connected to the main power lines 105 in the building via an outlet 115. The kit further comprises a phase coupler (FC) 113, enabling connection between the three phases of the power lines 105. Besides the communication kit, the system also comprises power line interfaces such as e.g. a switch 107, outlets 109 and a switch with outlet 111 for connecting electricity consumers, such as lamps, to the power lines 105 and controlling the electricity consumers connected to the power lines 105.

The PC communicates via the PC interface with the power line interfaces via the phase coupler (FC) 113. The PC interface 103 processes informations and commands to and from the PC by adding and reading information on the power line. The PC interface also makes sure that the units, switch 107, outlets 109 and switch with outlet 111 are up-to-date. The power line interfaces e.g. a switch 107, outlets 109 and switch with outlet 111 enable monitoring of energy consumption from every single unit and send the data via the main power lines 105 and the phase coupler 113 to the PC interface 103 e.g. for a graphical representation of the energy consumption in the house on a PC screen. This monitoring of energy consumption from every single outlet enables a complete overview of where and when energy is consumed in the different rooms and outlets of the building. The PC interface further comprises storage means for logging the amount of energy consumed and measured and received from every single power line interface. Besides this logging, the PC interface also logs the usage pattern of each power line interface, e.g. when and how the light has been switched on and off. Further, by storing this energy consumption on a power line interface, specific basis data can be used for making different statistics, and it is via a PC connected to the PC interface possible to present the usage over predefined time intervals such as the latest 24 hours, the latest week or month. Further, energy consumption on specific days could be compared.

The system is further via the PC programmable. This means that an outlet can be configured to be turned on or off in a specific time period. As an extended option, an outlet can be configured to turn off at a specific time only if the outlet is not in use, but delay the turn off time if the outlet is in use. The specific unit can tell if the outlet is in use or not by monitoring the current energy consumption of that specific outlet. Since the system is programmable and flexible you can save energy by programming specific electronic equipment connected to the outlets to be switched off instead of letting them stay standby.

In figure 2 the elements in a switch 107 from an intelligent energy control system according to the present invention are illustrated. The user interface (UI) 205 is in this embodiment the visual part of the switch unit. Information regarding the user interface 205, e.g. is the switch on or off, is captured in the central processer unit (CPU) 203 integrated in the switch. The CPU generates data to be transmitted over the power line. This data also indentifies a receiver ID, and a power line converter (PLC) 201 adds the data to the power line e.g. to be transmitted to the PC interface.

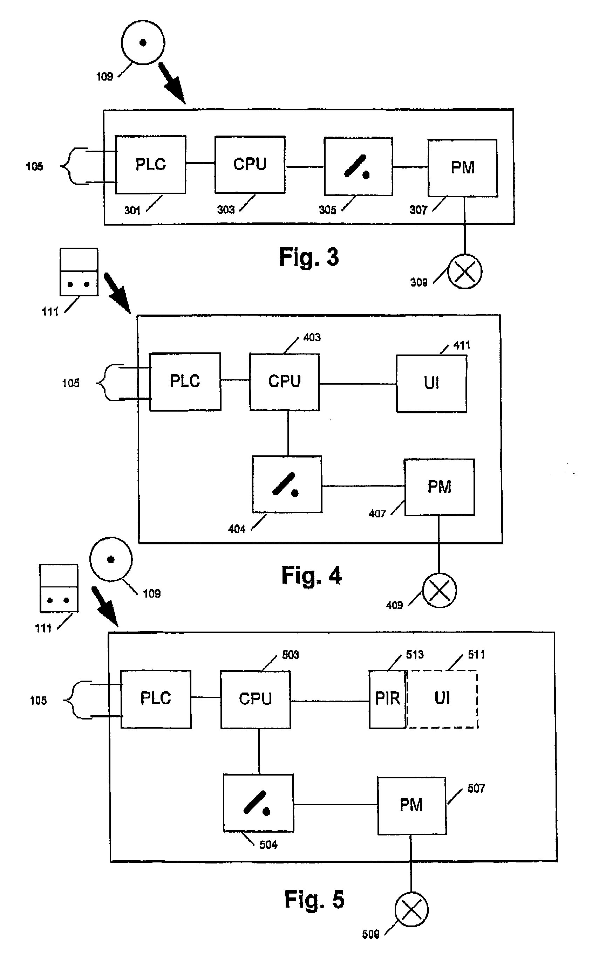

In figure 3 the elements of an outlet 109 from an intelligent energy control system according to the present invention are illustrated. An electricity consumer, e.g. a lamp 309, is connected to the power line 105 via the outlet 109. The outlet comprises a power line converter 301 for transmitting and receiving data communicated via the power lines 105, the PCL is connected to a CPU 303 for generating and reading data and has switching means 305 for switching on and off the electricity to the lamp based on instructions from the CPU. Between the switch 305 and the electricity consumer 309 a power measurement element is positioned in order to measure the amount of power consumed by the electricity consumer. Via the power line converter 301 the data to/from the CPU 303 can be sent to the PC interface, this data comprise the measured amount of consumed power.

In figure 4 the elements of an outlet 111 further comprising a switch are illustrated. Besides the elements described in connection with figure 3 above, the CPU 403 is also connected to a user interface (UI) 411 being the switch on the outlet 111. The switching on and off can therefore be done both based on instructions received via the power lines 105 or received from the user interface 411. When the user interface (switch) is activated this is input to the CPU, and the CPU transmits commands to the switching means 404 and switches on or off the electricity to the lamp 409.

In figure 5 the elements of an outlet with 111 or without 109 a switch having a motion sensor from an intelligent energy control system according to the present invention are illustrated. Besides the elements described in connection with figure 3, the CPU 403 is also connected to a motion sensor 513 and optionally also a user interface (UI) 511 being the switch on the outlet 111. The switching on and off can therefore be done both based on instructions received via the power lines 105, received from the motion sensor 513 and/or received from the user interface 511. When the motion detector detects motion, then this is input to the CPU, and the CPU transmits commands to the switching means 504 and switches on the electricity to the lamp 509.

This integrated motion sensor can also be programmed to control other units via power line communication. This enables turning on multiple lights in e.g. the living room after entering the hall where an outlet has this motion sensor integrated in the outlet. This is programmed from the PC connected to the PC interface and the communication is performed via the power lines.

The CPU illustrated in each of the above described power line interfaces could comprises different kinds of control logic for controlling the unit, e.g. it could be a possibility that instead of immediately turning light on/off, it could instead be turned on over a period of e.g. an hour, starting with a very dimmed light and gradually increasing the light effect until the light is on full power. The functionalities could be controlled via input from the PC interface.

Besides the communication between power line interfaces and the PC interface, the power line interfaces also communicate with each other via the power lines. This communication could e.g. be that a power line interface being a switch communicates with an outlet to turn on/off energy deliverance to a power line interface comprising an outlet.

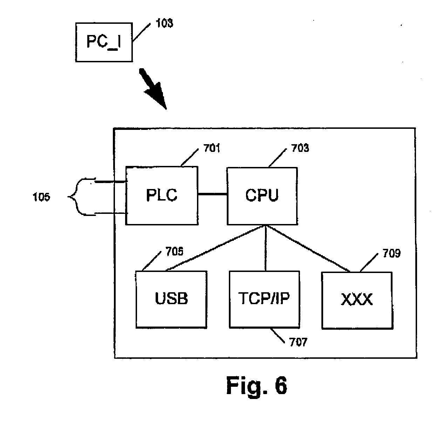

In figure 6 the elements of a PC interface 103 from an intelligent energy control system according to the present invention are illustrated. Via existing power lines 105 the PC interface 103 communicates with the power line interfaces. The information to and from the PC interface is via power line communication (PLC) 601 processed in the central processer unit (CPU) 603. The central processer unit (CPU) 603 integrated in the PC interface can be connected to data processing devices such as a PC via e.g. USB communication 605, TCP/IP communication 607 and other kinds of communication 609. Further, the PC interface comprises memory (not illustrated) e.g. for storing the received energy consumption data.

A further usage of the received energy consumption data from the individual power line interfaces, besides making the different statistics based on the energy consumption data, could also be to use the data to control the power line interfaces, e.g. via an adaptive control algorithm integrated in either the PC interface or in a PC connected to the PC interface. In an example the control algorithm could initially be predefined, e.g. via settings obtained from a user during setup of the system, and then based on the usage pattern measured via the energy consumption data the algorithm automatically adapts to the behavior of the user.

## Claims

1. An intelligent energy control system to be connected to power lines e.g. in a building, said system comprises a PC interface and power line interfaces adapted to be connected to said power lines and to transmit and receive information signals via said power lines,
- at least some of said power line interfaces are adapted to be used when connecting energy consumers to said power lines and comprise
○ means for measuring the amount of power consumed by said energy consumer and
○ means for transmitting the consumed amount of power to said PC interface as information signals via said power lines,
- said PC interface further being adapted to be connected to a data processing device, such as a PC, for processing said received data and comprises
○ means for receiving information signals with measured consumed amount of power from said power line interfaces via said power lines and
○ means for storing said received consumed amount of power for later processing.

2. An intelligent energy control system according to claim 1, wherein said power line interfaces further comprise means for transmitting and receiving information signals to another power line interface via said power lines.

3. An intelligent energy control system according to claim 1-2, wherein said PC interface further comprises means for transmitting information signals to a power line interface via said power lines.

4. A power line interface for an intelligent energy control system to be connected to power lines e.g. in a building, said system further comprises a PC interface, and wherein said PC interface and power line interface are adapted to be connected to said power lines and to transmit and receive information signals via said power lines, said power line interfaces are adapted to be used when connecting energy consumers to said power lines and comprise
○ means for measuring the amount of power consumed by said energy consumer and
○ means for transmitting the consumed amount of power to said PC interface as information signals via said power lines,

5. A PC interface for an intelligent energy control system to be connected to power lines e.g. in a building, said system further comprises power line interfaces, said PC interface and power line interfaces are adapted to be connected to said power lines and to transmit and receive information signals via said power lines, said PC interface further being adapted to be connected to a data processing device, such as a PC, for processing said received data and comprises
○ means for receiving information signals with measured consumed amount of power from said power line interfaces via said power lines and
○ means for storing said received consumed amount of power for later processing.
